(19) Europäisches Patentamt
European Patent Office
Office européen des brevets

(11) EP 2 515 086 B1

(12) EUROPÄISCHE PATENTSCHRIFT

(45) Veröffentlichungstag und Bekanntmachung des Hinweises auf die Patenterteilung:
06.04.2016 Patentblatt 2016/14

(51) Int Cl.:
*G01D 5/20* ^(2006.01)

(21) Anmeldenummer: **12152572.9**

(22) Anmeldetag: **26.01.2012**

(54) **Positionsmesseinrichtung sowie Maßstab**

Positioning device and scale

Dispositif de mesure de position ainsi que échelle de mesure

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.04.2011 DE 102011007756**

(43) Veröffentlichungstag der Anmeldung:
**24.10.2012 Patentblatt 2012/43**

(73) Patentinhaber: **Dr. Johannes Heidenhain GmbH 83301 Traunreut (DE)**

(72) Erfinder:
• **Frank, Alexander
83278 Traunstein (DE)**
• **Tiemann, Marc Oliver
A-5020 Salzburg (AT)**
• **Heumann, Martin, Dr.
83278 Traunstein (DE)**

(56) Entgegenhaltungen:
**EP-A1- 1 164 358    US-A- 3 685 029
US-A- 4 893 077    US-A1- 2006 232 268
US-B1- 6 545 461**

**Beschreibung**

Die vorliegende Erfindung betrifft einen Maßstab mit einer induktiv abtastbaren Teilung sowie eine Positionsmesseinrichtung mit diesem Maßstab.

Positionsmesseinrichtungen, die nach dem induktiven Messprinzip arbeiten, weisen einen Maßstab auf, der eine induktiv abtastbare Teilung besitzt. Die Teilung besteht aus einer Abfolge voneinander beabstandeter elektrisch leitfähiger Teilungselemente. Die Teilung wird im Messbetrieb von einer Abtasteinheit abgetastet, die zumindest eine Erregerwindung und eine Abtastwindung aufweist. Diese Windungen sind vorzugsweise flächig auf einer Leiterplatte aufgebracht. Ein an der Erregerwindung eingeprägter Erregerstrom generiert ein zeitlich wechselndes elektromagnetisches Erregerfeld, das durch die Anordnung der Teilungselemente positionsabhängig beeinflusst wird, wodurch in der Abtastwindung ein positionsabhängiges Abtastsignal induziert wird.

Induktiv abtastbare Maßstäbe und induktiv arbeitende Positionsmesseinrichtungen haben den Vorteil, dass sie relativ unempfindlich gegenüber Verschmutzungen sind. Sie sind insbesondere unempfindlich gegenüber Flüssigkeiten wie Wasser und Öle im Raum zwischen Maßstab und Abtasteinheit, weshalb sie sich besonders zur Winkel- und Längenmessung an Werkzeugmaschinen eignen.

In der EP 0 743 508 A2, der US 6,545,461 B1 und der EP 1 164 358 A1 wird ein induktiv abtastbarer Maßstab und eine induktive Positionsmesseinrichtung beschrieben. Es ist erläutert, dass die Teilungselemente aus einem Material mit hoher elektrischer Leitfähigkeit bestehen und auf einem Leiterplattenmaterial, beispielsweise FR4, aufgebracht sind. Das Leiterplattenmaterial eignet sich aufgrund seiner elektrischen Isolation besonders als Träger für die Teilungselemente. Aufgrund der mechanischen Nachteile des Leiterplattenmaterials wird in der EP 0 743 508 A2 vorgeschlagen, die Teilungselemente direkt auf ein Stahlsubstrat oder ein Invarsubstrat, also auf ein elektrisch leitendes Material aufzubringen, um die mechanische Stabilität zu verbessern.

Als Bedingung für die Verwendung eines Metallträgers wird in der EP 0 743 508 A2 angeführt, dass die elektrische Leitfähigkeit des Materials des Trägers nur sehr viel kleiner sein muss als die elektrische Leitfähigkeit des Materials der Teilungselemente. In der Praxis hat sich aber herausgestellt, dass bei der Verwendung von gebräuchlichem Stahl als Träger die Abtastsignale relativ gering sind, weshalb sich in der Praxis nur induktiv abtastbare Maßstäbe durchgesetzt haben, bei denen die Teilungselemente auf einem elektrisch isolierenden Träger, insbesondere Leiterplattenmaterial, aufgebracht sind. Ein derartiger Maßstab ist aber in großen Längen schwierig herstellbar und aufgrund des Leiterplattenmaterials nicht resistent gegen Umgebungseinflüsse.

Aufgabe der vorliegenden Erfindung ist es daher, einen induktiv abtastbaren Maßstab anzugeben, der auch in relativ großen Längen einfach herstellbar ist, unempfindlich gegenüber Umgebungseinflüssen ist und bei der induktiven Abtastung gut auswertbare, also hohe Abtastsignale generiert.

Diese Aufgabe wird erfindungsgemäß durch einen Maßstab mit den Merkmalen des Anspruchs 1 gelöst.

Der erfindungsgemäß ausgebildete Maßstab weist zumindest eine in Messrichtung verlaufende induktiv abtastbare Teilung auf, die aus einer in Messrichtung angeordneten Folge voneinander beabstandeter elektrisch leitfähiger Teilungselemente besteht. Die Teilungselemente sind derart ausgebildet, dass sich jeweils in einem Teilungselement Wirbelströme ausbilden können, die bei der Abtastung gegen ein von einer Abtasteinheit ausgehendes Erregerfeld wirken. Der Maßstab umfasst einen Schichtstapel, der ausschließlich aus einer Abfolge von metallischen Schichten besteht, wobei diese Abfolge von metallischen Schichten zumindest eine Trägerschicht und eine die Teilungselemente bildende Teilungsschicht aufweist. Die Trägerschicht ist zwischen der Teilungsschicht und einem metallischen Substrat angeordnet und besteht aus einem ferromagnetischen, insbesondere auch weichmagnetischen, Metall. Das Substrat ist derart dimensioniert, dass es maßgebend die mechanischen Eigenschaften des Schichtstapels bestimmt, indem die Dicke des Substrats ein Vielfaches der Dicke der Trägerschicht beträgt.

Aus der US 2006/0232268 A1 ist ein Maßstab, welcher aus einem Schichtstapel, bestehend aus einer Abfolge von metallischen Schichten bekannt, wobei der Schichtstapel auch eine Schicht aus ferromagnetischem Material umfasst. Die Teilungselemente dieses Maßstabs sind aber in einer gemeinsamen Schicht in Form einer Magnetisierung vorhanden, so dass er nicht zur induktiven Abtastung geeignet ist.

Einen ähnlichen Aufbau findet man in der US 3,685,029, wobei hier die Nutzung als Magnetspeicher offenbart ist. Die Aufzeichnungsschicht ist nicht zur induktiven Abtastung geeignet.

Vorzugsweise ist gemäß der Erfindung das Material der Trägerschicht ein ferromagnetisches Metall mit einer Permeabilität $\mu_r$ größer 100, besonders vorteilhaft ist die Verwendung eines Metalls mit einer Permeabilität $\mu_r$ größer 1000. Geeignete ferromagnetische Metalle sind insbesondere Mu-Metalle, dieses sind weichmagnetische Nickel-Eisen-Legierungen mit einem Nickelanteil von etwa 70-80%. Mu-Metalle werden unter dem Handelsnamen Mumetall vertrieben. Anstelle von Nickel-Eisen-Legierungen können auch andere Legierungen oder auch ferritische Stähle mit einer relativ hohen Permeabilität, insbesondere größer 100, Verwendung finden.

Bei der Erfindung wird die Tatsache ausgenutzt, dass bei der induktiven Abtastung Wechselfelder generiert werden und für die Effizienz eines Maßstabs nicht allein die elektrische Leitfähigkeit der Trägerschicht bedeutend ist, auf der die Teilungselemente aufgebracht sind. Ebenso bedeutend ist die Permeabilität des als Trägerschicht verwendeten Materials. Bei der Erfindung wird die von der Permeabilität des verwendeten Materials frequenzabhängige Eindringtiefe von Wirbelströmen genutzt. Vor allem bei hochpermeablen Werkstoffen ist die Eindringtiefe nämlich besonders klein. Je geringer die Eindringtiefe, desto höher ist der wirksame Widerstand für Wirbelströme. Störende Wirbelströme, die sich von einem Teilungselement zu einem daneben angeordneten Teilungselement ausbilden, können somit unterdrückt werden. Bei der Verwendung von ferromagnetischen Metallen hoher Permeabilität spielt die elektrische Leitfähigkeit des Metalls eine untergeordnete Rolle.

Die Permeabilität der Trägerschicht ist höher als die Permeabilität des Substrats.

Als Substrat wird vorzugsweise ein Edelstahl verwendet. Damit das Substrat maßgebend die mechanischen Eigenschaften des gesamten Schichtstapels und somit des Maßstabs bestimmt, beträgt die Dicke des Substrats ein Vielfaches der Dicke der Trägerschicht, insbesondere beträgt die Dicke des Substrats mehr als das 5 bis 20-fache der Dicke der Trägerschicht.

Durch das Vorsehen eines relativ dicken Substrats für die Schichtenfolge Trägerschicht und Teilungsschicht, wird dem Verbund aus allen Schichten die mechanische Eigenschaft des Substrats aufgeprägt. Durch diese Maßnahme können für die Trägerschicht Materialien mit sehr hoher Permeabilität eingesetzt werden, die dann auch relativ weich und mechanisch instabil sein können.

Die Materialien und Dickenverhältnisse werden vorzugsweise derart gewählt, dass der Schichtstapel und somit der Maßstab einen resultierenden thermischen Ausdehnungskoeffizienten hat, der nur unwesentlich vom thermischen Ausdehnungskoeffizienten des Substrats abweicht, insbesondere nur um einen Wert von maximal $\pm 1 \times 10^{-6} K^{-1}$ abweicht. Vorzugsweise hat das Substrat einen thermischen Ausdehnungskoeffizienten von etwa $10 \times 10^{-6} K^{-1}$ und der Maßstab somit einen resultierenden thermischen Ausdehnungskoeffizienten von etwa $9 \times 10^{-6} K^{-1}$ bis $11 \times 10^{-6} K^{-1}$.

In einer bevorzugten Ausgestaltung ist auf einer Seite des Substrats die Schichtenfolge Trägerschicht und Teilungsschicht vorgesehen und auf der anderen Seite des Substrats zumindest eine Kompensationsschicht, die einer Krümmung des Schichtstapels hervorgerufen durch den Bimetalleffekt entgegenwirkt. Diese Kompensationsschicht besteht vorzugsweise aus dem gleichen Metall wie die Trägerschicht, insbesondere auch aus einem ferromagnetischen Metall, das insbesondere eine Permeabilität $\mu_r$ größer 100, vorzugsweise größer 1000 aufweist.

Einen besonders innigen und stabilen Verbund der Schichten des Schichtstapels erhält man, wenn diese mittels Walzplattieren, insbesondere Kaltwalzplattieren, miteinander verbunden sind.

Ein derartiger Maßstab kann für Positionsmesseinrichtungen in Form von Winkelmesseinrichtungen und Längenmesseinrichtungen eingesetzt werden. Da ein derart aufgebauter Maßstab auch in Bandform leicht herstellbar ist, eignet er sich besonders für Längenmesseinrichtungen großer Länge. Ein erfindungsgemäß aufgebauter Maßstab in Bandform kann auch in vorteilhafter Weise in Winkelmesseinrichtungen eingesetzt werden, wenn er beispielsweise auf den Innen- oder Außenumfang einer Trommel aufgebracht wird. Zum klebenden Aufbringen des erfindungsgemäß ausgebildeten Maßstabs kann der Schichtstapel auf der Unterseite durch ein Klebemittel ergänzt sein, insbesondere ein Klebeband, das zur guten Handhabung als doppelseitiges Klebeband ausgeführt sein kann.

Mit der Erfindung soll weiterhin eine Positionsmesseinrichtung angegeben werden, die relativ unempfindlich gegen Umgebungseinflüsse ist und die gut auswertbare Abtastsignale generiert.

Eine derartige Positionsmesseinrichtung ist im Anspruch 11 angegeben. Die Positionsmesseinrichtung weist demnach einen Maßstab mit einer in Messrichtung verlaufenden induktiv abtastbaren Teilung auf, die aus einer in Messrichtung angeordneten Folge voneinander beabstandeter Teilungselemente besteht. Dieser Maßstab umfasst einen Schichtstapel, der ausschließlich aus einer Abfolge von metallischen Schichten besteht, wobei diese Abfolge von metallischen Schichten zumindest eine Trägerschicht und eine die Teilungselemente bildende Teilungsschicht aufweist. Die Trägerschicht ist zwischen der Teilungsschicht und einem metallischen Substrat angeordnet und ist ein ferromagnetisches Metall. Die Permeabilität der Trägerschicht ist höher als die Permeabilität des Substrats, das Material der Trägerschicht weist insbesondere eine Permeabilität $\mu_r$ größer 100, vorzugsweise größer 1000 auf. Das Substrat ist derart dimensioniert, dass es die mechanischen Eigenschaften des Schichtstapels maßgebend bestimmt. Die Positionsmesseinrichtung umfasst ferner eine Abtasteinheit zur Abtastung der Teilung des Maßstabs, wobei die Abtasteinheit eine Erregereinheit zur Erzeugung eines elektromagnetischen Wechselfeldes und eine Detektoreinheit zur Detektion des von den Teilungselementen positionsabhängig modulierten elektromagnetischen Wechselfeldes aufweist.

Die Erregereinheit wird vorzugsweise von zumindest einer flächigen Erregerwindung und die Detektoreinheit von zumindest einer flächigen Abtastwindung gebildet.

In einer besonders vorteilhaften Ausgestaltung ist auf einer Seite des Substrats die Schichtenfolge Trägerschicht und Teilungsschicht vorgesehen und auf der anderen Seite des Substrats zumindest eine Kompensationsschicht, die vorzugsweise aus dem gleichen Material wie die Trägerschicht besteht und ein ferromagnetisches Metall ist. Die Abtasteinheit weist eine sie umgebende Abschirmung auf, wobei die Abschirmung derart ausgebildet ist, dass diese mit der Kompensationsschicht einen geschlossenen Magnetkreis ausbildet. Hierzu ist die Permeabilität $\mu_r$ des Metalls der Kompen-

sationsschicht insbesondere größer 100, vorzugsweise größer 1000.

Alle Angaben zur Permeabilität beziehen sich auf den Betrieb der Positionsmesseinrichtung, also bei einer Frequenz des Erregerstroms von größer 1 MHz.

Vorteile sowie Einzelheiten der vorliegenden Erfindung ergeben sich aus der nachfolgenden Beschreibung von Ausführungsbeispielen anhand der beiliegenden Figuren.

Es zeigen

Figur 1    eine perspektivische Ansicht einer induktiven Positionsmesseinrichtung;

Figur 2    den Maßstab der Positionsmesseinrichtung gemäß Figur 1;

Figur 3a   einen ersten Verfahrensschritt zur Herstellung des Maßstabs;

Figur 3b   einen zweiten Verfahrensschritt zur Herstellung des Maßstabs;

Figur 4    eine weitere Ausgestaltung eines Maßstabs gemäß der Erfindung und

Figur 5    eine Positionsmesseinrichtung mit dem in Figur 4 dargestellten Maßstab.

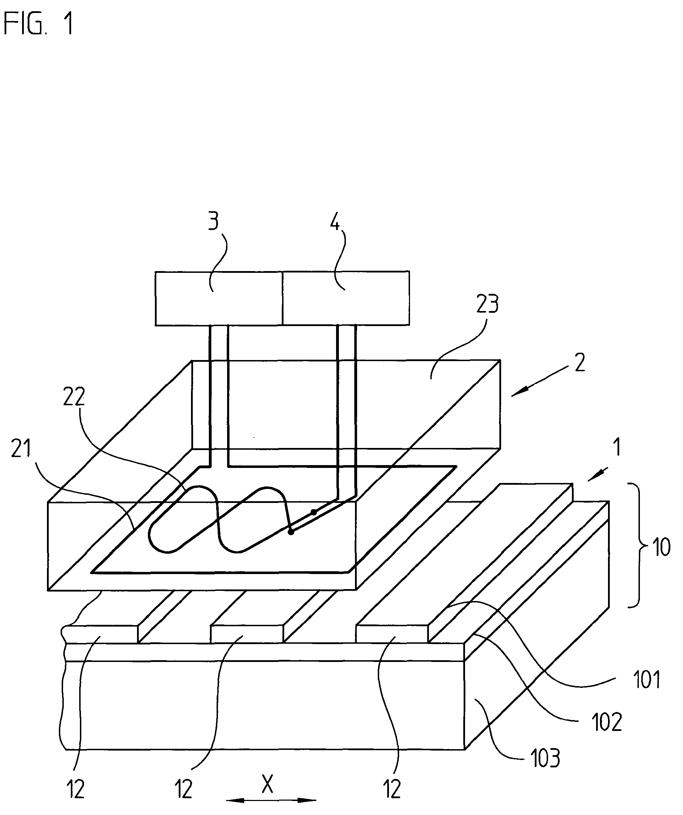

In Figur 1 ist in einer perspektivischen Ansicht der prinzipielle Aufbau einer Positionsmesseinrichtung mit einem erfindungsgemäß ausgestalteten Maßstab 1 dargestellt. Der Maßstab 1 weist eine Teilung auf, die von einer ihr in geringem Abstand gegenüberliegenden Abtasteinheit 2 abtastbar ist. Zur Positionsmessung in Messrichtung X erfolgt eine Relativbewegung zwischen dem Maßstab 1 und der Abtasteinheit 2. Die Teilung besteht aus einer periodischen Abfolge von in Messrichtung X voneinander beabstandeten elektrisch leitfähigen Teilungselementen 12. Im dargestellten Ausführungsbeispiel sind die Teilungselemente 12 flächig und rechteckförmig ausgebildet, die Teilungselemente können aber auch andere Formen aufweisen, beispielsweise rund oder dreieckförmig. Weiterhin ist die vollflächige Form der Teilungselemente 12 nicht Bedingung, ein Teilungselement kann auch als geschlossene Windung ausgebildet sein. Wesentlich ist nur, dass sich jeweils in einem Teilungselement 12 Wirbelströme ausbilden können, die gegen ein von der Abtasteinheit 2 ausgehendes Erregerfeld wirken.

Die Abtasteinheit 2 ist in Figur 1 nur schematisch dargestellt, um die Funktion der induktiven Abtastung beim Zusammenwirken mit dem Maßstab 1 zu erläutern. Die Abtasteinheit 2 weist zumindest eine Erregereinheit insbesondere in Form einer flächigen Erregerwindung 21 auf, die von einer Ansteuereinheit 3 mit einem Erregerstrom derart gespeist wird, dass ein zeitlich wechselndes elektromagnetisches Erregerfeld im Bereich der Teilungselemente 12 erzeugt wird. Dieser Erregerstrom weist beispielsweise eine Frequenz von einigen MHz auf. Die Erregerwindung 21 ist derart räumlich angeordnet, dass sie in der gegenüberliegenden Abfolge der Teilungselemente 12 ein möglichst homogenes elektromagnetisches Feld ausbildet.

Die Abtasteinheit 2 weist darüber hinaus zumindest eine Detektoreinheit insbesondere in Form einer flächigen Abtastwindung 22 auf. Die Ausführung und räumliche Anordnung der Erregerwindung 21 ist derart, dass in dem Bereich der Abtastwindung 22 ein möglichst homogener Feldverlauf erzeugt wird. Die Abtastwindung 22 befindet sich hierzu innerhalb der Erregerwindung 21. Das von der Erregerwindung 21 generierte Erregerfeld generiert in den Teilungselementen 12 Wirbelströme, die als Gegenfeld gegen das Erregerfeld wirken. In der Abtastwindung 22 wird aufgrund des ihr zugeordneten Erregerfeldes eine Spannung induziert, die von der relativen Lage zu den elektrisch leitenden Teilungselementen 12 abhängig ist. Die Teilungselemente 12 sind in Messrichtung X räumlich derart angeordnet, dass sie das Erregerfeld positionsabhängig beeinflussen. Die Erregerwindung 21 ist also mit der Abtastwindung 22 in Abhängigkeit der relativen Lage der Teilungselemente 12 in Messrichtung X induktiv gekoppelt. Das elektromagnetische Wechselfeld wird durch die Teilungselemente 12 in Messrichtung X positionsabhängig moduliert, dadurch variiert auch die in der Abtastwindung 22 induzierte Spannung positionsabhängig. Die in der zumindest einen Abtastwindung 22 induzierte Spannung wird einer Auswerteeinheit 4 zugeführt, die daraus ein elektrisches positionsabhängiges Signal bildet.

Besonders vorteilhaft ist die Anordnung von Erregerwindung 21 und Abtastwindung 22 in Form von auf einem gemeinsamen Träger 23 aufgebrachten Leiterbahnen. Wie in Figur 1 schematisch dargestellt ist, sind diese Leiterbahnen auf der Seite des Trägers 23 angeordnet, die der Abfolge der Teilungselemente 12 in geringem Abtastabstand gegenüberliegt. Der Träger 23 kann beispielsweise als Leiterplatte ausgebildet sein. Dabei sind die Teilungselemente 12 des Maßstabs 1 vorzugsweise in einer Ebene angeordnet, die parallel zu der Ebene ausgerichtet ist, in welcher die Erregerwindung 21 und die Abtastwindung 22 verlaufen.

In nicht gezeigter Weise sind üblicherweise mehrere gegeneinander phasenversetzte Abtastwindungen in der Abtasteinheit 2 vorgesehen, um mehrere gegeneinander phasenverschobene Abtastsignale zu erzeugen, beispielsweise um 90° gegeneinander phasenverschobene Abtastsignale. Aus Gründen der Übersichtlichkeit ist diese Ausgestaltung in Figur 1 nicht dargestellt.

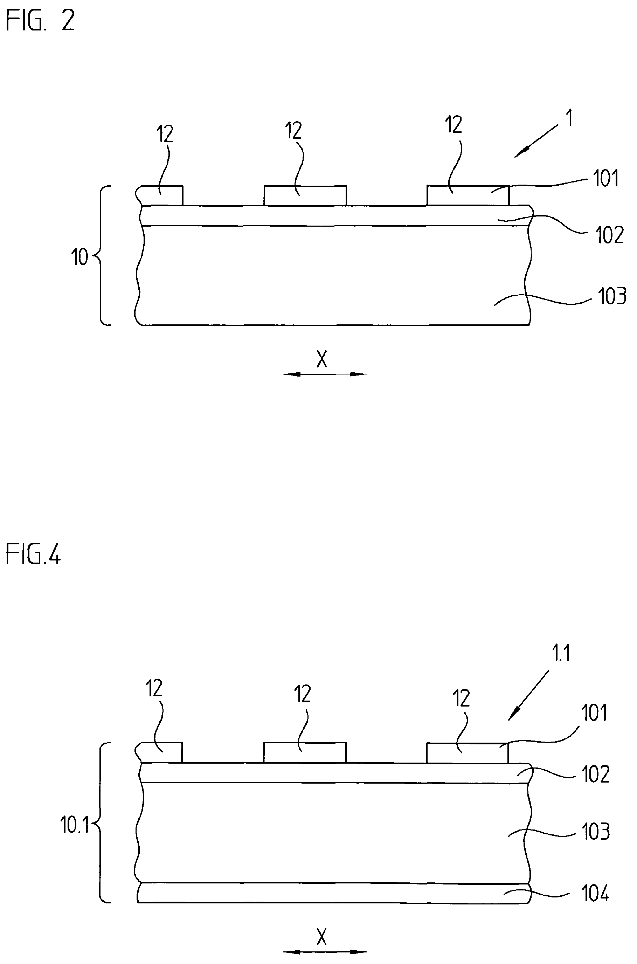

Der Maßstab 1 ist aus einem Schichtstapel 10 gebildet, der aus einem metallischen Verbund, also aus einer Abfolge von metallischen Schichten 101, 102, 103 besteht, wie in Figur 2 näher dargestellt ist. Diese Ausgestaltung hat den besonderen Vorteil, dass der Maßstab 1 im Messbetrieb besonders unempfindlich gegenüber Umgebungsmedien ist. Die Schichten 101, 102, 103 des Schichtstapels 10 sind fest miteinander verbunden, also zueinander unverschieblich.

Die Abfolge der metallischen Schichten 101, 102, 103 des Schichtstapels 10 weist zumindest eine Trägerschicht 102 auf, die ein ferromagnetisches Metall ist. Dieses Metall ist vorzugsweise weichmagnetisch. Auf dieser durchgehenden Trägerschicht 102 ist eine Teilungsschicht 101 aufgebracht, welche nach erfolgter Strukturierung die in Messrichtung X voneinander beabstandeten Teilungselemente 12 des Maßstabs 1 bildet. Als Material für diese Teilungselemente 12 werden Metalle wie beispielsweise Kupfer, Aluminium, Silber, Gold oder diese Metalle enthaltende Legierungen verwendet. Das Material der Teilungselemente 12 weist eine hohe elektrische Leitfähigkeit auf, ist jedoch nicht ferromagnetisch. Die Permeabilität $\mu_r$ des Materials der Teilungsschicht 101 und somit der Teilungselemente 12 liegt bei etwa 1.

Der Schichtstapel 10 umfasst weiterhin ein Substrat 103, auf dem die Abfolge Trägerschicht 102 und Teilungsschicht 101 vorgesehen ist. Dieses Substrat 103 ist derart dimensioniert, dass es die mechanischen Eigenschaften des Schichtstapels 10 maßgebend bestimmt. Hierzu beträgt die Dicke des Substrats 103 ein Vielfaches, insbesondere das 5- bis 20-fache, der Dicke der Trägerschicht 102 sowie ein Vielfaches der Dicke der Teilungsschicht 101. Die Dickenverhältnisse werden derart gewählt, dass der thermische Ausdehnungskoeffizient des Maßstab 1 vorwiegend vom Substrat 103 bestimmt wird.

Die Permeabilität der Trägerschicht 102 ist höher als die Permeabilität des Substrats 103. Die Permeabilität $\mu_r$ des Metalls der Trägerschicht 102 ist möglichst hoch, insbesondere größer 100, vorteilhafterweise größer 1000.

Als Material für das Substrat 103 ist rostfreier Edelstahl mit hoher Zugfestigkeit und hoher $R_{p0.2}$-Dehngrenze, insbesondere rostfreier und härtbarer Edelstahl gewählt. Durch Vergüten werden die mechanischen Eigenschaften verbessert, die Formstabilität, die Flexibilität und die Zähigkeit werden erhöht. Wird ein Substrat 103 in Bandform verwendet, kann dieses zum Transport oder zur Lagerung aufgrund der Flexibilität des Bandes aufgerollt werden, ohne dass es zu plastischen Verformungen kommt. Durch die Schaffung eines festen Verbundes der Schichten 102 und 101 mit dem Substrat 103 werden diese vorteilhaften mechanischen Eigenschaften auf den gesamten Schichtstapel 10 und somit auf den Maßstab 1 übertragen.

Die unmittelbar unterhalb der Teilungselemente 12 angeordnete und durchgehende Trägerschicht 102 aus einem Material mit hoher Permeabilität hat den Vorteil, dass störende Wirbelströme, die sich von einem Teilungselement 12 zu einem daneben angeordneten Teilungselement 12 ausbilden, zumindest weitgehend unterdrückt werden. Voraussetzung dafür ist, dass die Dicke der Trägerschicht 102 abhängig vom gewählten Material ausreichend groß gewählt wird. Die Dicke soll ein Vielfaches, beispielsweise das 5-fache, der Eindringtiefe $\delta$ der Wirbelströme betragen:

$$\delta = \frac{1}{\sqrt{\pi \cdot f \cdot \mu_0 \cdot \mu_r \cdot \sigma}}$$

mit

$\delta$ = Eindringtiefe (Tiefe, bei der der Strom auf ca. 37% des Oberflächenwertes gefallen ist)
$\sigma$ = spezifischer elektrischer Widerstand des Materials
f = Frequenz
$\mu_0$ = Permeabilitätskonstante des Vakuums
$\mu_r$ = relative Permeabilitätszahl des Materials

Wird beispielsweise als Trägerschicht 102 ein sogenanntes Mu-Metall, also beispielsweise eine NiFe-Legierung mit etwa 80% Ni verwendet, gelten folgende Dimensionierungsregeln:

## Permeabilität $\mu_r$= 5000

spezifischer elektrischer Widerstand: 0,55$\mu\Omega$m
Relevanter Frequenzbereich: 1MHz bis 10MHz (Beispielfrequenzen)

Abhängig von der daraus errechneten Eindringtiefe $\delta$ ergibt sich eine optimale Dicke der Trägerschicht 102:

Eindringtiefe $\delta$ bei 1MHz = 5,3$\mu$m
=> optimale Dicke $\approx$ 27$\mu$m (5-fache Eindringtiefe $\delta$)
Eindringtiefe $\delta$ bei 10MHz = 1,7$\mu$m
=> optimale Dickes $\approx$ 9$\mu$m (5-fache Eindringtiefe ö)

Bei einer Dicke der Trägerschicht 102 von etwa 15 $\mu$m wird ein Substrat 103 mit einer Dicke von 75 $\mu$m bis 300 $\mu$m verwendet.

Bei einem einfach - insbesondere durch Walzplattieren - herstellbaren Maßstab 1 in Bandform, der auch gut handhabbar ist, beträgt die Dicke der Trägerschicht 102 maximal 50 $\mu$m. Die Gesamtdicke des Schichtstapels 10 ist kleiner 1000 $\mu$m.

Da die relative Permeabilitätszahl $\mu_r$ des Materials der Trägerschicht 102 bei hohen Werten diesbezüglich die bestimmende Größe ist, ist die Größe der elektrischen Leitfähigkeit der Trägerschicht 102 nachrangig. Die Eindringtiefe ö ist in einem Material mit hoher Permeabilität besonders gering und das Material bildet für die Wirbelströme einen hohen Widerstand. Die metallische Trägerschicht 102 ist somit ein für die Wirbelströme wirkender Widerstand zwischen der Teilungsschicht 101 und dem Substrat 103. Als Folge verbleiben die Wirbelströme zum größten Teil in den Teilungselementen 12 des Maßstabs 1. Eine störende elektrisch leitfähige Verbindung zwischen den in Messrichtung X voneinander angeordneten Teilungselementen 12 liegt für die hochfrequenten Wirbelströme nicht mehr vor.

Die Anordnung der Trägerschicht 102 zwischen der Teilungsschicht 101 und dem Substrat 103 hat den Vorteil, dass bei der Auswahl des Materials für die Trägerschicht 102 vorrangig auf die magnetischen Eigenschaften geachtet werden kann. Die mechanischen Eigenschaften der Trägerschicht 102 sind nachrangig, da die mechanischen Eigenschaften des Schichtstapels 10 vorrangig vom Substrat 103 bestimmt werden. Wird beispielsweise ein Substrat 103 in Bandform verwendet, kann der Maßstab 1 zum Transport oder zur Lagerung aufgrund der Flexibilität des bandförmigen Substrats 103 aufgerollt werden, ohne dass es zu plastischen Verformungen des Maßstabs 1 kommt. Die Verwendung eines die mechanischen Eigenschaften des Maßstabs 1 bestimmenden Substrats 103 hat nun den Vorteil, dass für die Trägerschicht 102 Materialien mit sehr hoher Permeabilität eingesetzt werden können. Diese Materialien haben nämlich in der Regel den Nachteil, dass sie relativ weich und leicht plastisch verformbar sind.

Die Schichten 101, 102, 103 des Schichtstapels 10 sind innig durch flächigen Kontakt zueinander unverrückbar miteinander verbunden, so dass der Schichtstapel 10 als Maßstab 1 handhabbar ist. Ein besonders vorteilhaftes Verfahren zur Herstellung ist das Walzplattieren, mit dem die Schichten 101, 102, 103 des Schichtstapels 10 untrennbar miteinander verbunden werden. Als Walzplattierverfahren kann das Warmwalzverfahren oder das Kaltwalzverfahren eingesetzt werden. Als Ergebnis erhält man eine bestens haftende Teilungsschicht 101 auf der Trägerschicht 102. Darüber hinaus erhält man eine innige flächige Verbindung zwischen dem Substrat 103 und der Trägerschicht 102. Diese innige Verbindung gewährleistet, dass die mechanischen Eigenschaften des Substrats 103 vorherrschen und auf die weiteren Schichten 101, 102 des Schichtstapels 10 übertragen werden, insbesondere die Flexibilität und die thermischen Ausdehnungseigenschaften. Das Walzplattieren hat den Vorteil, dass besonders lange Maßstäbe 1 über mehrere Meter einfach hergestellt werden können, indem der Schichtstapel 10 aus Metallbändern hergestellt wird.

Zur Bildung des Schichtstapels 10 besonders geeignet ist das Kaltwalzplattieren. Es besteht aus einem Umformprozess, bei dem die gereinigten und ggf. vorbehandelten Schichten 101, 102, 103 in Form von Metallbändern gemeinsam in kaltem Zustand, also unterhalb der Rekristallisationstemperatur, gewalzt werden. Aufgrund der dabei auftretenden großen Drücke werden einerseits Dickenreduzierungen von 30 bis 60% erzielt und andererseits wird ein fester unlösbarer Verbund zwischen den einzelnen Schichten 101, 102, 103 untereinander geschaffen. Dieser innige Verbund resultiert aus Adhäsionskräften, mechanischen Verklammerungen der Oberflächen und metallischen Bindungen.

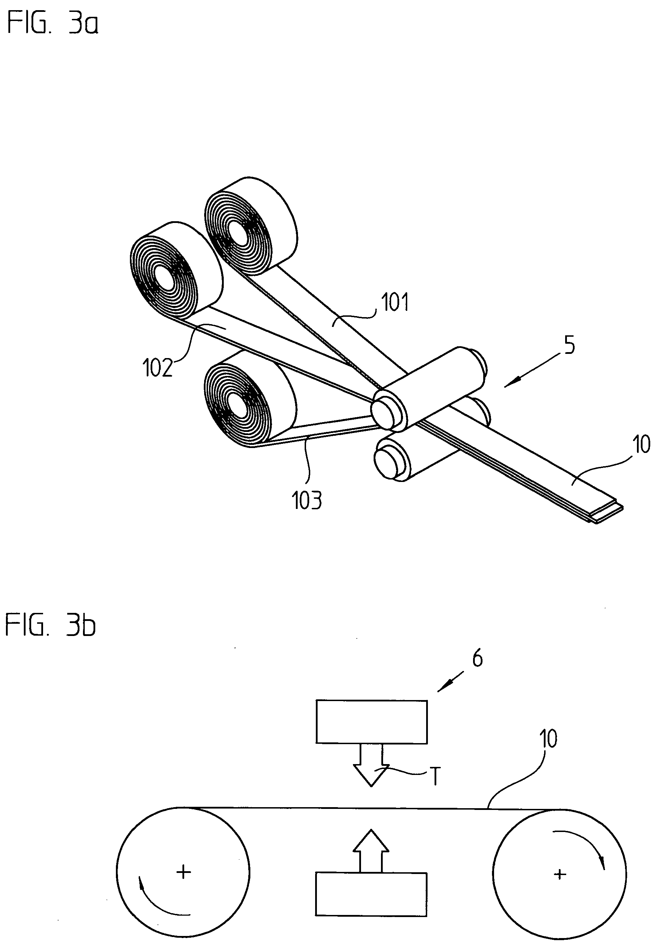

In Figur 3a ist das Verfahren Kaltwalzplattieren zur Herstellung des Schichtstapels 10 schematisch dargestellt. Das Substrat 103, die Trägerschicht 102 und die Teilungsschicht 101 liegen in Bandform vor und werden gemeinsam einer Walzvorrichtung 5 zugeführt, in der diese unter hohem Druck miteinander vereinigt werden.

Nach dem eigentlichen Walzvorgang schließt sich eine Glühbehandlung, auch Diffusionsglühen oder Haftungsglühen genannt, an. Bei dieser Wärmebehandlung erfolgt einerseits eine Materialrekristallisation und andererseits in den Verbindungszonen zwischen den einzelnen Schichten 101, 102, 103 eine weitere Verfestigung der Verbindung. In Figur 3b ist eine derartige Glühbehandlung des gewalzten Schichtstapels 10 schematisch dargestellt. Der Schichtstapel 10 wird dabei durch eine Glühvorrichtung 6 geführt, in der der Schichtstapel einer hohen Temperatur T ausgesetzt wird. Vorzugsweise folgt zumindest eine weitere Glühbehandlung. Wird als Substrat 103 Stahl gewählt, so kann dieser Stahl bei einer weiteren Glühbehandlung gehärtet werden. Desweiteren kann eine Glühbehandlung dazu dienen, die magnetischen Eigenschaften, wie z. B. die Permeabilität der Trägerschicht 102 zu optimieren.

Bei Bedarf können mehrere Walz- und Glühprozesse aufeinanderfolgend durchgeführt werden, um die gewünschten Parameter des Schichtstapels 10 zu erreichen.

Der so gebildete Schichtstapel 10 lässt sich danach als Verbund weiter verarbeiten. Wenn erforderlich, kann eine Oberflächenbehandlung erfolgen und der Verbund kann beispielsweise durch Zuschnitt auf die erforderlichen Abmessungen gebracht werden. Die Teilungselemente 12 werden durch bekannte Strukturierungsverfahren, wie beispielsweise einen photochemischen Ätzprozess, aus der Teilungsschicht 101 gebildet..

Nachfolgend wird eine weitere Ausgestaltung eines Maßstabs 1.1 erläutert. Zur Reduzierung von thermischen Verbiegungen des Maßstabs 1.1 ist ein symmetrischer Schichtaufbau des Schichtstapels 10.1 von besonderem Vorteil. Ein Beispiel dazu ist in Figur 4 dargestellt. Dabei ist auf die Rückseite des Substrats 103 eine Kompensationsschicht 104 aufgebracht, welche einer Verbiegung des Substrats 103, hervorgerufen durch die einseitige Beschichtung mit der Trägerschicht 102 und der Teilungsschicht 101, vermeiden soll. Insbesondere soll damit eine durch die Trägerschicht 102 eingeleitete Krümmung, hervorgerufen durch den Bimetalleffekt, verhindert bzw. zumindest weitgehend vermieden werden. In vorteilhafter Weise besteht zu diesem Zweck auch die auf der Rückseite des Substrats 103 aufgebrachte Kompensationsschicht 104 aus dem gleichen Material wie die Trägerschicht 102. Die Dicke der Kompensationsschicht 104 wird derart gewählt, dass eine Krümmung des Substrats 103 vermieden wird. Die Dickenverhältnisse werden auch hier vorzugsweise derart gewählt, dass die mechanischen Eigenschaften und der thermische Ausdehnungskoeffizient des Maßstabs 1.1 überwiegend vom Substrat 103 bestimmt werden.

Besonders vorteilhaft ist es, wenn der Schichtstapel 10.1, bestehend aus der Teilungsschicht 101, der Trägerschicht 102, dem Substrat 103 und der Kompensationsschicht 104, wiederum gemeinsam durch ein Walzverfahren, insbesondere das Kaltwalzverfahren, zu einem innigen Verbund zusammengefügt werden.

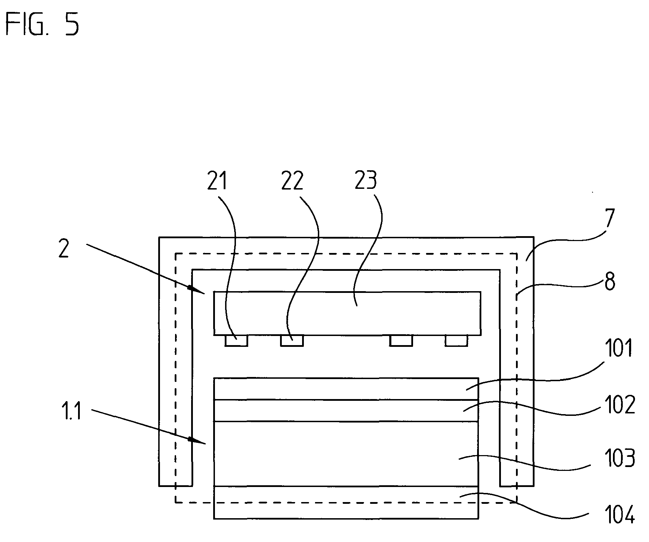

Wie in Figur 5 dargestellt ist, kann die Kompensationsschicht 104 auf der Rückseite des Substrats 103 zusätzlich dazu genutzt werden, um die Positionsmesseinrichtung vor externen magnetischen Störfeldern abzuschirmen. Um die Abtasteinheit 2 wird hierzu eine magnetische Abschirmung 7 angeordnet, welche bis in die Nähe der Kompensationsschicht 104 geführt ist. Die Abschirmung 7 besteht aus einem flussführenden Material, insbesondere auch weichmagnetischen Material, so dass zusammen mit der Kompensationsschicht 104 ein zumindest weitgehend geschlossener Magnetkreis 8 ausgebildet wird. Die Abschirmung 7 umgibt die Abtasteinheit und den Maßstab 1.1 U-förmig an drei Seiten. Die Abschirmung 7 erstreckt sich über die ferromagnetische Trägerschicht 102 und reicht zumindest weitgehend bis zur Kompensationsschicht 104.

Sollte es für bestimmte Anwendungen erforderlich sein, so kann der Maßstab 1 bzw. 1.1 zusätzlich vor Umwelteinflüssen geschützt werden, indem zumindest die Oberseite des Maßstabs 1 bzw. 1.1 mit einer Schutzschicht versehen wird. Diese Schutzschicht kann eine Lackschicht, eine Pulverbeschichtung, eine DLC-Schicht oder eine Metallschicht sein.

Die Erfindung ist beispielhaft anhand eines einspurigen inkrementalen Maßstabs 1 bzw. 1.1 erläutert. Die Erfindung ist auch bei mehrspurigen inkrementalen sowie bei absoluten Maßstäben realisierbar. Ein absoluter Maßstab kann dabei einspurig in Form eines sogenannten PRC-Codes oder Kettencodes ausgeführt sein, als mehrspuriger Code mit mehreren nebeneinander angeordneten Inkrementalspuren unterschiedlicher Teilungsperiode, beispielsweise in Form eines Gray-Codes oder als sogenanntes Vernier-System mit mehreren nebeneinander angeordneten Inkrementalspuren mit nur geringfügig unterschiedlichen Teilungsperioden.

**Patentansprüche**

1. Maßstab mit einer induktiv abtastbaren Teilung, bestehend aus einer in Messrichtung (X) angeordneten Folge voneinander beabstandeter elektrisch leitfähiger Teilungselementen (12), welche derart ausgebildet sind, dass sich jeweils in einem Teilungselement (12) Wirbelströme ausbilden können, die bei der Abtastung gegen ein von einer Abtasteinheit (2) ausgehendes Erregerfeld wirken, wobei der Maßstab (1, 1.1) einen Schichtstapel (10, 10.1) umfasst, der aus einer Abfolge von metallischen Schichten (101, 102, 103, 104) besteht, und dass diese Abfolge von metallischen Schichten (101, 102, 103, 104) zumindest eine Trägerschicht (102) und eine die Teilungselemente (12) bildende Teilungsschicht (101) aufweist, wobei die Trägerschicht (102) zwischen der Teilungsschicht (101) und einem metallischen Substrat (103) angeordnet ist, wobei das Substrat (103) derart dimensioniert ist, dass es die mechanischen Eigenschaften des Schichtstapels (10, 10.1) maßgebend bestimmt, indem die Dicke des Substrats (103) ein Vielfaches der Dicke der Trägerschicht (102) beträgt, und dass die Trägerschicht (102) ein ferromagnetisches Metall ist.

2. Maßstab nach Anspruch 1, die wobei Permeabilität der Trägerschicht (102) größer ist als die Permeabilität des Substrats (103).

3. Maßstab nach Anspruch 1 oder 2, das wobei Material der Trägerschicht (102) ein weichmagnetisches Metall ist.

4. Maßstab nach einem der vorhergehenden Ansprüche, wobei das Material der Trägerschicht (102) ein Metall ist mit einer Permeabilität $\mu_r$ größer 100, insbesondere größer 1000 ist.

5. Maßstab nach einem der vorhergehenden Ansprüche, wobei das Material der Teilungsschicht (101) eine Permeabilität $\mu_r$ von annähernd 1 aufweist, insbesondere zumindest eines der Metalle Kupfer, Aluminium, Gold oder Silber enthält.

6. Maßstab nach einem der vorhergehenden Ansprüche, wobei das Substrat (103) aus Edelstahl besteht.

7. Maßstab nach einem der vorhergehenden Ansprüche, wobei auf einer Seite des Substrats (103) die Schichtenfolge Trägerschicht (102) und Teilungsschicht (101) vorgesehen ist, und dass auf der anderen Seite des Substrats (103) zumindest eine Kompensationsschicht (104) vorgesehen ist, die einer Durchbiegung des Schichtstapels (10, 10.1) hervorgerufen durch den Bimetalleffekt entgegenwirkt.

8. Maßstab nach Anspruch 7, die wobei Kompensationsschicht (104) aus einem ferromagnetischen Metall besteht.

9. Maßstab nach einem der vorhergehenden Ansprüche, wobei die Schichten (101, 102, 103, 104) des Schichtstapels (10.1) mittels Walzplattieren miteinander verbunden sind.

10. Maßstab nach Anspruch 9, die Schichten wobei (101, 102, 103, 104) des Schichtstapels (10, 10.1) mittels Kaltwalzplattieren miteinander verbunden sind.

11. Positionsmesseinrichtung mit einem Maßstab (1, 1.1) nach einem der vorhergehenden Ansprüche und mit einer Abtasteinheit (2) zur Abtastung der Teilungselemente (12) des Maßstabs (1), wobei die Abtasteinheit (2) eine Erregereinheit (21) zur Erzeugung eines elektromagnetischen Wechselfeldes und eine Detektoreinheit (22) zur Detektion des von den Teilungselementen (12) positionsabhängig modulierten elektromagnetischen Wechselfeldes aufweist.

12. Positionsmesseinrichtung nach Anspruch 11, wobei die Erregereinheit von zumindest einer flächigen Erregerwindung (21) und die Detektoreinheit von zumindest einer flächigen Abtastwindung (22) gebildet ist.

13. Positionsmesseinrichtung nach Anspruch 11 oder 12, wobei
auf einer Seite des Substrats (103) die Schichtenfolge Trägerschicht (102) und Teilungsschicht (101) vorgesehen ist,
auf der anderen Seite des Substrats (103) zumindest eine Kompensationsschicht (104) aus ferromagnetischem Material vorgesehen ist, und
die Abtasteinheit (2) eine Abschirmung (7) aufweist, wobei die Abschirmung (7) derart ausgebildet ist, dass diese mit der Kompensationsschicht (104) einen Magnetkreis (8) ausbildet.

**Claims**

1. Scale having a graduation that can be sensed inductively, comprising a sequence of electrically conductive graduation elements (12) arranged in the measuring direction (X) and spaced apart from one another, which are formed in such a way that in each case eddy currents are able to form in a graduation element (12), which currents during the sensing act relative to an excitation field originating from a sensor unit (2), the scale (1, 1.1) comprising a layer stack (10, 10.1) which comprises a sequence of metallic layers (101, 102, 103, 104), and that this sequence of metallic layers (101, 102, 103, 104) has at least one carrier layer (102) and a graduation layer (101) forming the graduation elements (12),
wherein
the carrier layer (102) is arranged between the graduation layer (101) and a metallic substrate (103), wherein the substrate (103) is dimensioned in such a way that it definitively determines the mechanical properties of the layer stack (10, 10.1) in that the thickness of the substrate (103) is a multiple of the thickness of the carrier layer (102), and
wherein the carrier layer (102) is a ferromagnetic metal.

2. Scale according to Claim 1, wherein the permeability of the carrier layer (102) is greater than the permeability of the substrate (103).

3. Scale according to Claim 1 or 2, wherein the material of the carrier layer (102) is a soft magnetic metal.

4. Scale according to one of the preceding claims, wherein the material of the carrier layer (102) is a metal with a permeability $\mu_R$ greater than 100, in particular greater than 1000.

5. Scale according to one of the preceding claims, wherein the material of the graduation layer (101) has a permeability $\mu_R$ of approximately 1, in particular contains at least one of the metals copper, aluminium, gold or silver.

6. Scale according to one of the preceding claims, wherein the substrate (103) consists of stainless steel.

7. Scale according to one of the preceding claims, wherein the layer sequence comprising carrier layer (102) and graduation layer (101) is provided on one side of the substrate, and wherein at least one compensation layer (104), which counteracts a deflection of the layer stack (10, 10.1) brought about by the bimetal effect, is provided on the other side of the substrate (103).

8. Scale according to Claim 7, wherein the compensation layer (104) consists of a ferromagnetic metal.

9. Scale according to one of the preceding claims, wherein the layers (101, 102, 103, 104) of the layer stack (10.1) are connected to one another by means of roll cladding.

10. Scale according to Claim 9, wherein the layers (101, 102, 103, 104) of the layer stack (10, 10.1) are connected to one another by means of cold roll cladding.

11. Position measuring device having a scale (1, 1.1) according to one of the preceding claims and having a sensor unit (2) for sensing the graduation elements (12) of the scale (1), wherein the sensor unit (2) has an excitation unit (21) for generating an alternating electromagnetic field and a detector unit (22) for detecting the alternating electromagnetic field that is modulated on the basis of the position of the graduation elements (12).

12. Position measuring device according to Claim 11, wherein the excitation unit is formed by at least one flat excitation winding (21), and the detector unit is formed by at least one flat sensor winding (22).

13. Position measuring device according to Claim 11 or 12, wherein

the layer sequence comprising carrier layer (102) and graduation layer (101) is provided on one side of the substrate (103),

at least one compensation layer (104) of ferromagnetic material is provided on the other side of the substrate (103), and

the sensor unit (2) has a shield (7), wherein the shield (7) is formed in such a way that, together with the compensation layer (104), it forms a magnetic circuit (8).

**Revendications**

1. Échelle de mesure munie d'une division pouvant être balayée par induction, constituée par une Succession agencée dans la direction de mesure (X) d'éléments de division électriquement conducteur espacés les uns des autres (12), qui sont configurés de sorte que des courants de Foucault puissent à chaque fois se former dans un élément de division (22), qui agissent lors du balayage contre un champ d'excitation issu d'une unité de balayage (2), l'échelle de mesure (1, 1.1) comprenant un empilement de couches (1C, 10.1), qui est constitué d'une succession de couches métalliques (101, 102, 103, 104), et cette succession de couches métalliques (101, 102, 103, 104) comprenant au moins une couche support (102) et une couche de division (101) formant les éléments de division (12), dans laquelle la couche support (102) est agencée entre la couche de division (101) et un substrat métallique (103), le substrat (103) étant dimensionné de sorte qu'il détermine de marnière décisive les propriétés mécaniques de l'empilement de couches (10, 10.1), l'épaisseur du substrat (103) étant un multiple de l'épaisseur de la couche support (102), et

la couche support (102) est un métal ferromagnétique.

2. Échelle de mesure selon la revendication 1, dans laquelle la perméabilité de la couche support (102) est supérieure à la perméabilité du substrat (103).

3. Échelle de mesure selon la revendication 1 ou 2, dans laquelle le matériau de la couche support (102) est un métal faiblement magnétique.

4. Échelle de mesure selon l'une quelconque des revendications précédentes, dans laquelle le matériau de la couche support (102) est un métal ayant une perméabilité $\mu_r$ supérieure à 100, notamment supérieure à 1 000.

5. Échelle de mesure selon l'une quelconque des revendications précédentes, dans laquelle le matériau de la couche de division (101) présente une perméabilité $\mu_r$ d'approximativement 1, notamment d'au moins un des métaux cuivre, aluminium, or ou argent.

6. Échelle de mesure selon l'une quelconque des revendications précédentes, dans laquelle le substrat (103) est constitué d'acier inoxydable.

7. Échelle de mesure selon l'une quelconque des revendications précédentes, dans laquelle la succession de couches de la couche support (102) et de la couche de division (101) est prévue sur un côté du substrat (103), et au moins une couche de compensation (104) est prévue sur l'autre côté du substrat (103), qui contre une flexion de l'empilement de couches (10, 10.1) causé par l'effet bimétallique.

8. Échelle de mesure selon la revendication 7, dans laquelle la couche de compensation (104) est constituée d'un métal ferromagnétique.

9. Échelle de mesure selon l'une quelconque des revendications précédentes, dans laquelle les couches (101, 102, 103, 104) de l'empilement de couches (10.1) sont reliées les unes avec les autres par placage au cylindre.

10. Échelle de mesure selon la revendication 9, dans laquelle les couches (101, 102, 103, 104) de l'empilement de couches (10, 10.1) sont reliées les unes avec les autres par placage au cylindre à froid.

11. Dispositif de mesure de position muni d'une échelle de mesure (1, 1.1) selon l'une quelconque des revendications précédentes et muni d'une unité de balayage (2) pour le balayage des éléments de division (12) de l'échelle de mesure (1), l'unité de balayage (2) comprenant une unité d'excitation (21) pour la génération d'un champ alternatif électromagnétique et une unité de détection (22) pour la détection du champ alternatif électromagnétique modulé selon la position par les éléments de division (12).

12. Dispositif de mesure de position selon la revendication 11, dans lequel l'unité d'excitation est formée par au moins un enroulement d'excitation plat (21) et l'unité de détection par au moins un enroulement de balayage plat (22).

13. Dispositif de mesure de position selon la revendication 11 ou 12, dans lequel la succession de couches de la couche support (102) et la couche de division (101) est prévue sur un côté du substrat (103), au moins une couche de compensation (104) en matériau ferromagnétique est prévue sur l'autre côté du substrat (103), et

l'unité de balayage (2) comprend un blindage (7), le blindage (7) étant configuré pour former un circuit magnétique (8) avec la couche de compensation (104).

FIG. 1

FIG. 2

FIG.4

FIG. 3a

FIG. 3b

FIG. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0743508 A2
- US 6545461 B1
- EP 1164358 A1
- US 20060232268 A1
- US 3685029 A